# EUROPÄISCHE PATENTSCHRIFT

(11) **EP 2 678 558 B1**
(45) Veröffentlichungstag und Bekanntmachung des Hinweises auf die Patenterteilung: **23.09.2015**
(21) Anmeldenummer: 12700088.3
(22) Anmeldetag: 05.01.2012
(51) Int. Cl.: F03D 11/00, H02G 3/30, B66D 1/36, F16L 3/10, F16L 3/22

(54) **BEFESTIGUNGSSYSTEM FÜR KABEL, INSBESONDERE BEI WINDKRAFTANLAGEN**
FIXING SYSTEM FOR CABLES, IN PARTICULAR IN WIND TURBINES
SYSTÈME DE FIXATION POUR CÂBLES, EN PARTICULIER POUR ÉOLIENNES

(30) Priorität: 25.02.2011 DE 102011012391
(43) Veröffentlichungstag der Anmeldung: 01.01.2014
(60) Teilanmeldung: 15002072.5
(73) Patentinhaber: HYDAC Accessories GmbH, 66280 Sulzbach/Saar (DE)
(72) Erfinder: CASPARI, Jochen, 66606 St. Wendel (DE); YAGCI, Burhan, 66280 Sulzbach (DE); MARYNIOK, Peter, 66693 Mettlach (DE)
(74) Vertreter: Bartels, Martin Erich Arthur
(86) Internationale Anmeldenummer: PCT/EP2012/000034
(87) Internationale Veröffentlichungsnummer: WO 2012/113491

(56) Entgegenhaltungen:
- WO-A1-00/79660
- DE-A1-102011 076 940
- GB-A- 2 478 772
- US-A- 4 386 752

## Beschreibung

Die Erfindung betrifft ein Befestigungssystem für Kabel, insbesondere bei Windkraftanlagen, mit den Merkmalen im Oberbegriff von Anspruch 1.

Um die in Windkraftanlagen erzeugten Energien abzuführen sowie für andere betriebliche Zwecke, wie Steuerung, Überwachung und dergleichen, sind Kabel, die durch den Turm ins Maschinenhaus führen, an den entsprechenden Tragstrukturen, insbesondere den Turmsegmenten, zuverlässig festzulegen. Üblicherweise werden hierfür Befestigungen mit schellenartigen Grundkörpern benutzt, in denen darin eingelegte Kabel sicherbar sind. Derartige Befestigungssysteme, bei denen auch eine entsprechende Anzahl von Schraubvorgängen durchzuführen ist, erfordern einen hohen Montageaufwand. Dies gilt insbesondere für die Befestigung von Kabeln, die von unten durch den Turm zum Maschinenhaus geführt und an die Generatoreinheit anzuschließen sind. Bei üblichen Windkraftanlagen kann diese Generatoreinheit zusammen mit dem Maschinenhaus bis zu drei Umdrehungen ausführen, bevor das Maschinenhaus zurückgesteuert wird. Damit die Kabel die Bewegung mitmachen können, werden sie über eine in den Turm hängende Kabelschlaufe geführt. Damit die Kabel bei Drehbewegungen nicht aneinander scheuern, müssen die Kabel hierbei auf Distanz gehalten werden. Üblicherweise werden hierfür die Kabel über eine runde Tragstruktur gehalten, beispielsweise in Form eines Rohrstückes, um das die Kabel verteilt und mit daran mit einfachen Schellen befestigt werden. Eine derartige Montage gestaltet sich aufwendig und mühsam.

Die US 4 386 752 beschreibt ein Befestigungssystem für Kabel mit einem Grundkörper, der an einer Tragstruktur festlegbar ist, und mit einer Kabelaufnahme, die zum Einlegen von Kabeln eine Öffnung aufweist, die durch eine Abdeckeinrichtung verschließbar ist, wobei die Kabelaufnahme in Form von einem am Grundkörper anbringbaren Bauteils vorgesehen und am Grundkörper in einer sich zumindest über einen Teil eines Ringes erstreckenden Anordnung mit außenliegender Öffnung angeordnet ist und wobei die Abdeckeinrichtung Haltekörper aufweist, mittels denen die Öffnung der Kabelaufnahme zur Fixierung von eingelegten Kabeln blockierbar ist.

Im Hinblick hierauf liegt der Erfindung die Aufgabe zugrunde, ein für das fragliche Einsatzgebiet besonders geeignetes Befestigungssystem zur Verfügung zu stellen.

Erfindungsgemäß ist diese Aufgabe durch ein Befestigungssystem gelöst, das die Merkmale des Patentanspruches 1 in seiner Gesamtheit aufweist.

Demgemäß besteht eine wesentliche Besonderheit der Erfindung darin, dass der Grundkörper ein Band aufweist, das sich zwischen Endabschnitten in einem ein Teil eines Kreisringes bildenden Bogen erstreckt, entlang dem eine Reihe von Kabelaufnahmen angebracht ist und dass die Kabelaufnahmen zwischen Positionierkörpern angeordnet sind, die sich in einer in Umfangsrichtung verlaufenden Reihe vom kreisbogenartigen Band radial erstrecken und mit Führungskanälen passend in Eingriff kommen, die durch Vertiefungen in den Seitenwänden der Kabelaufnahmen gebildet sind. Die Positionierkörper dienen auch zur Aufnahme von zwischen Kabelaufnahmen und Grundkörper wirkenden Kräften.

Ferner ist vorgesehen, dass Kabelaufnahmen in Form von am Grundkörper anbringbaren Bauteilen vorgesehen und am Grundkörper in einer sich zumindest über einen Teil eines Ringes erstreckenden Anordnung mit außenliegender Öffnung angeordnet sind, wobei die Abdeckeinrichtung Haltekörper aufweist, mittels denen die Öffnung der jeweiligen Kabelaufnahmen zur Fixierung, insbesondere Vorfixierung, der eingelegten Kabel blockierbar ist.

Durch die Ringanordnung der Kabelaufnahmen lassen sich die Kabel in einer vom Maschinenhaus in den Turm hängenden Kabelschlaufe ebenso positioniert und voneinander distanziert, wie in den Turmsegmenten selbst, festlegen, so dass ein Scheuern von Kabeln auf jeden Fall vermieden ist. Dadurch, dass ferner Kabelaufnahmen in Form von am Grundkörper anbringbaren Bauteilen vorgesehen sind, eröffnet sich die vorteilhafte Möglichkeit, mit geringem konstruktivem Aufwand und kostengünstig ein Befestigungssystem zu realisieren, das besonders hoch belastbar ist. Bei am Grundkörper gesondert anbringbaren Kabelaufnahmen können für diese und den Grundkörper unterschiedliche Werkstoffe benutzt werden. So können Kabelaufnahmen beispielsweise rationell und kostengünstig aus einem Kunststoffmaterial pressgeformt werden, während der Grundkörper als Metallkonstruktion, etwa in Form einer Stahlkonstruktion hoher Strukturfestigkeit, ausgebildet, d.h. auf optimale Festigkeit ausgelegt werden kann, ohne dass auf die Benutzung von aus kostengünstigem Werkstoff bestehenden Kabelaufnahmen verzichtet werden müsste. Dadurch, dass erfindungsgemäß außerdem als Bestandteil der Abdeckeinrichtung Haltekörper vorhanden sind, mittels denen zur Vorfixierung von in die Kabeldurchführungen der Kabelaufnahmen eingelegten Kabeln die Einlegeöffnung blockierbar ist, lassen sich die Kabel, da sie gegen Herausfallen gesichert sind, nacheinander bequem in die Kabeldurchführungen einlegen.

Da vorzugsweise die Abdeckeinrichtung ferner ein Spannband aufweist, das über die Haltekörper die Haltekraft auf die Kabel ausübt, ist für die Sicherung der gesamten Anzahl der in Ringanordnung gehaltenen Kabel lediglich ein einziger Schraubvorgang für das Spannen des Spannbandes erforderlich. Über die Abdeckeinrichtung lässt sich im Bedarfsfall auch eine Haltekraft auf die aufgenommenen Kabel ausüben.

Bei besonders vorteilhaften Ausführungsbeispielen weist der Grundkörper ein Band aus Stahl auf, das sich zwischen Endabschnitten, die Anbringstellen zur Verankerung an der Tragstruktur bilden, erstreckt. Eine derartige Unterkonstruktion aus Stahl gewährleistet eine sichere Verankerung der Kabel, selbst wenn die Kabelaufnahmen aus einem Material geringerer Festigkeit, etwa aus Kunststoff, bestehen.

Eine besonders hohe Festigkeit der Gesamtkonstruktion ist bei Ausführungsbeispielen erreichbar, bei denen eine sich in Form einer Sehne durch das Innere des Bogens erstreckende Traverse vorgesehen ist, die das Band des Bogens auf beiden Seiten zwischen den als Verankerungsstelle dienenden Endabschnitten und dem jeweiligen Ende der Reihe der Kabelaufnahmen durchdringt und nach außen vorsteht, wobei die vorstehenden Enden der Traverse jeweils eine Angriffsstelle für das Spannband bilden. Eine derartige Traverse, insbesondere wenn sie an den Durchdringungsstellen des Bandes mit diesem verschweißt ist, bildet eine besonders wirksame Verstärkung des beispielsweise halbkreisförmig verlaufenden Bogens, so dass mit geringem Werkstoffaufwand eine hohe Festigkeit gewährleistet ist. Gleichzeitig stehen durch die Traverse Angriffsstellen für das Spannband zur Verfügung, an denen die Spannkraft mit überwiegend in Bandlängsrichtung verlaufender Kraftkomponente und daher mit hoher Betriebssicherheit in die Konstruktion eingeleitet werden kann.

Die Traverse ist bei besonders bevorzugten Ausführungsbeispielen durch einen Stahlstab gebildet, der einen Querschnitt in Form eines Rechteckes aufweist und mit sich in Umfangsrichtung des Bogens erstreckenden Langseiten einen Schlitz im Band des Bogens durchgreift. Bei dieser Anordnung wirkt die Spannkraft des Spannbandes in Richtung der Langseiten des Rechteckprofils, also in der Richtung des größeren Biegewiderstandes der Traverse.

Vorzugsweise ist jede Kabelaufnahme einzeln mit dem Band des Grundkörpers verbindbar und weist jeweils eine muldenartige Kabeldurchführung auf.

Mit besonderem Vorteil kann die Anordnung so getroffen sein, dass die Kabelaufnahmen zur Anlage am Band eine dessen Wölbung entsprechend gewölbte Grundfläche aufweisen, wobei zwischen dieser und dem Band eine die Kabelaufnahmen am Grundkörper sichernde Verrastung gebildet ist. Ein derartiges System zeichnet sich durch einen besonders geringen Montageaufwand aus.

Bei besonders bevorzugten Ausführungsbeispielen sind die Haltekörper am Rand der Öffnung der muldenartigen Kabeldurchführungen der Kabelaufnahmen derart schwenkbar gelagert, dass die Haltekörper zwischen einer von der Öffnung abgeschwenkten Einlegeposition und einer die eingelegten Kabel sichernden Vorfixierposition bewegbar sind, wobei zwischen Kabelaufnahme und Haltekörper eine diesen in der Vorfixierposition sichernde Rasteinrichtung vorgesehen ist. Durch die schwenkbare Lagerung der Haltekörper an der Kabelaufnahme sind die Haltekörper unverlierbar an der jeweiligen Kabelaufnahme gesichert und brauchen für den Montagevorgang nicht eigens gehandhabt zu werden.

Bei besonders vorteilhaften Ausführungsbeispielen weisen die Haltekörper ein Deckteil, das an der Kabelaufnahme angelenkt ist und an seiner Oberseite eine Anlagefläche für das Spannband bildet, und ein am Deckteil verschiebbar geführtes Klemmteil auf, das durch eine Federanordnung in Richtung auf die aufgenommenen Kabel zugestellt ist. Gegebenenfalls lässt sich dergestalt auch eine Vorspannkraft realisieren.

Nachstehend ist die Erfindung anhand der Zeichnung im Einzelnen erläutert. Es zeigen:
- Fig. 1: eine perspektivische Schrägansicht lediglich des Grundkörpers eines Ausführungsbeispiels des erfindungsgemäßen Befestigungssystems, ohne am Grundkörper angebrachte Kabelaufnahmen;
- Fig. 2: eine vergrößert und abgebrochen gezeichnete perspektivische Schrägansicht eines Teilbereichs des Ausführungsbeispiels, wobei von einer Reihe von am Grundkörper angebrachten Kabelaufnahmen lediglich eine letzte gänzlich und eine vorletzte teilweise sichtbar sind;
- Fig. 3: eine vergrößert und abgebrochen gezeichnete Teilvorderansicht des Ausführungsbeispiels, wobei zwei aufeinanderfolgende Kabelaufnahmen sichtbar sind;
- Fig. 4: einen ebenfalls vergrößert und abgebrochen dargestellten Teillängsschnitt des Ausführungsbeispiels;
- Fig. 5: eine ebenfalls vergrößert dargestellte, perspektivische Schrägansicht einer einzelnen Kabelaufnahme;
- Fig. 6: eine gegenüber den Fig. 2 bis 5 in noch größerem Maßstab gezeichnete Schnittdarstellung eines einzelnen Haltekörpers für ein Ausführungsbeispiel der Erfindung; und
- Fig. 7: eine der Fig. 1 ähnliche perspektivische Schrägansicht des Grundkörpers eines abgewandelten Ausführungsbeispiels.

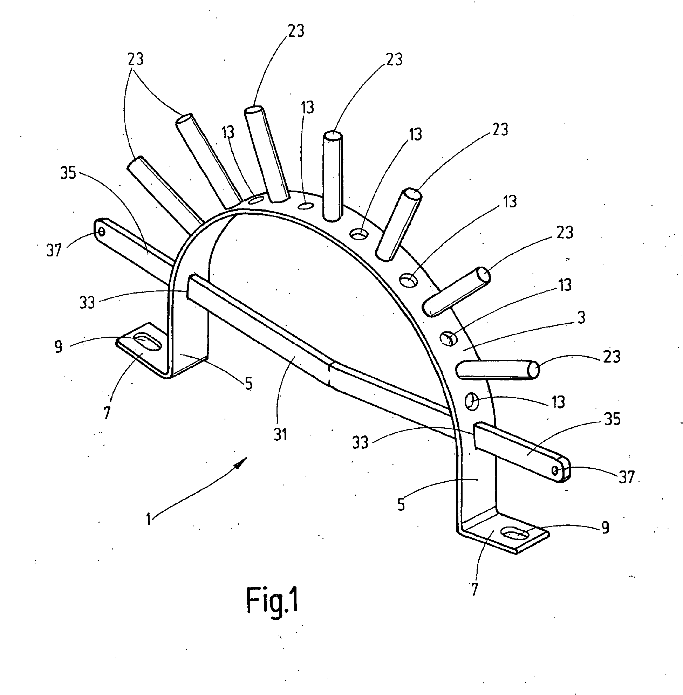

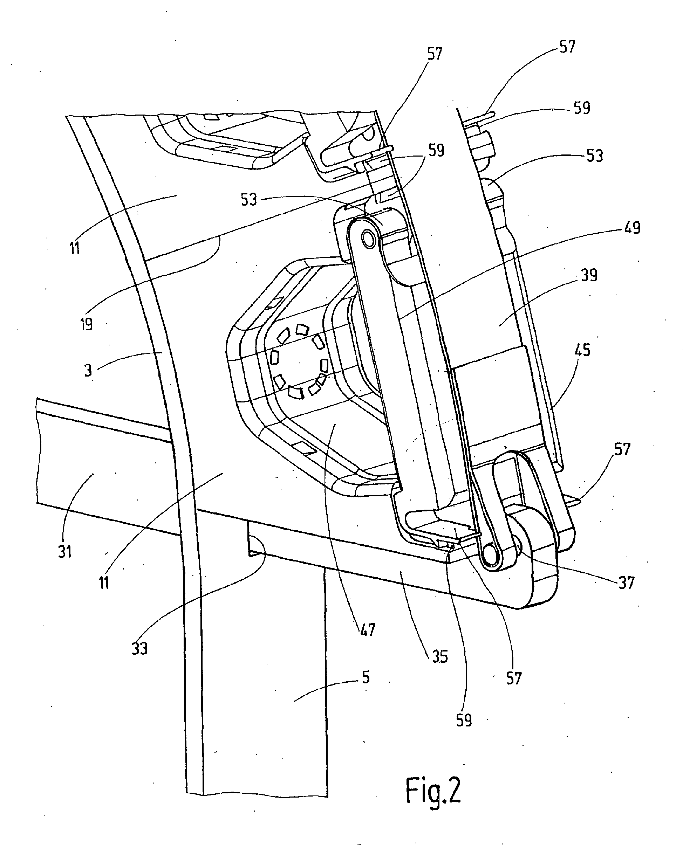

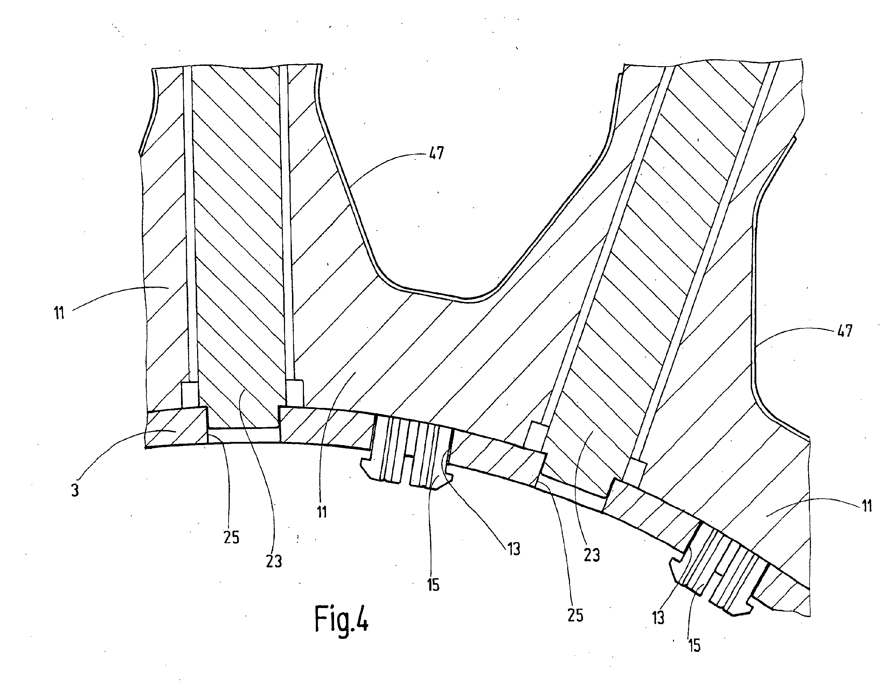

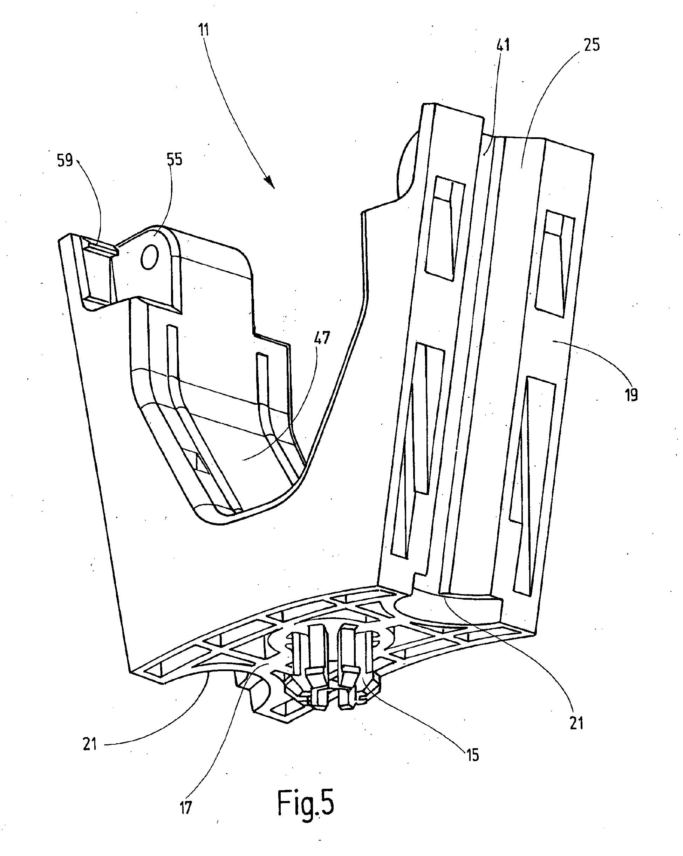

Die Fig. 1 zeigt in gesonderter Darstellung den Grundkörper 1 eines zu beschreibenden Ausführungsbeispiels ohne daran angebrachte Kabelaufnahmen. Der Grundkörper 1 ist eine Stahlkonstruktion aus einem Stahlband 3, das zwischen Endabschnitten 5 halbkreisförmig gebogen ist. An den Endabschnitten 5 dienen abgewinkelte Laschen 7 mit Langlöchern 9 zur Verankerung des Grundkörpers 1 an einer Tragstruktur. Für die Anbringung an der Innenseite einer Turmwand bei Windkraftanlagen sind die Laschen 7 in Anpassung an die Rundung der Turmwandung entsprechend gegenüber den Endabschnitten 5 abgewinkelt. Der zwischen den Endabschnitten 5 verlaufende Bogen des Bandes 3 bildet beim vorliegenden Beispiel die Lagerung für acht Kabelaufnahmen, die in Fig. 1 für die Übersichtlichkeit der Darstellung des Grundkörpers 1 nicht eingezeichnet, jedoch in den Fig. 2 bis 5 sichtbar sind, wo die Kabelaufnahmen mit 11 bezeichnet sind. Für die Anbringung der Kabelaufnahmen 11 am Band 3 des Grundkörpers 1 weist das Band 3 über den Kreisbogen gleichmäßig verteilt für jede anzubringende Kabelaufnahme 11 ein Befestigungsloch 13 auf, das zur Verrastung mit der Kabelaufnahme 11 dient, indem eine Schnappverbindung mit einem Rastdom 15 (Fig. 4 und 5) gebildet wird, der aus der Grundfläche 17 (Fig. 5) der jeweiligen Kabelaufnahme 11 vorspringt. Wie am deutlichsten aus Fig. 5 zu ersehen ist, weist die Grundfläche 17 eine Wölbung auf, die dem Kreisbogen des Bandes 3 angepasst ist. Die Fig. 4 zeigt die gebildete Schnappverbindung.

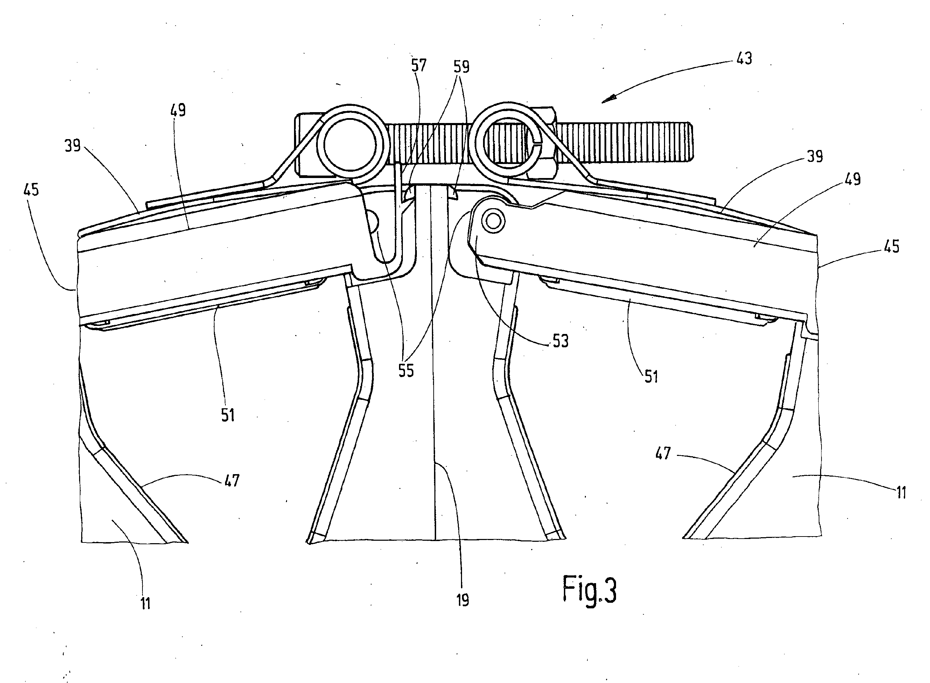

Wie die Fig. 2 und 3 zeigen, liegen die Kabelaufnahmen 11, wenn sie am Band 3 angebracht sind, mit ihren Seitenflächen 19 (Fig. 5) bündig aneinander, so dass die Kabelaufnahmen 11 am Grundkörper 1 eine bogenförmige Reihe ohne Unterbrechung bilden. Wie die Fig. 5 zeigt, befinden sich in den Seitenflächen 19 der Kabelaufnahmen 11 von der Grundfläche 17 bis zum oberen Ende durchgehende Vertiefungen 21, die so geformt sind, dass bei bündiger Aneinanderlage der Seitenflächen 19 zweier aufeinanderfolgender Kabelaufnahmen 11 in den Vertiefungen 21 Positionierkörper passend aufnehmbar sind. Dabei handelt es sich um zylindrische Bolzen 23, die in Bolzenlöcher 25 (Fig. 4) des Bandes 3 sitzen, eingepresst, eingeschweißt oder eingeklebt sind und sich radial vom Bogen des Bandes 3 erstrecken. Die Vertiefungen 21 in den Kabelaufnahmen 11 weisen eine innere, den Bolzen 23 angepasste Teilzylinderfläche 25 auf. Die Positionierkörper könnten auch eine andere Querschnittsform besitzen.

Wie Fig. 1 zeigt, erstreckt sich durch den Bogen des Bandes 3 in Art einer Bogensehne eine Traverse 31, die durch einen Stahlstab rechteckförmigen Querschnitts gebildet ist. Diese Traverse 31 durchdringt Schlitze 33 des Bandes 3 und steht mit ihren Endteilen 35 in Radialrichtung, bezogen auf den Kreisbogen des Bandes 3 nach außen vor. An den Endteilen 35 der Traverse 31 bildet diese jeweils eine Verankerungsstelle 37 für ein jeweiliges Ende des Spannbandes 39, das die Reihe der Kabelaufnahmen 11 umgibt, siehe Fig. 2 und 3. Die Traverse 31 ist ein Stahlstab mit rechteckigem Querschnitt und ist in solcher Orientierung durch die Schlitze 33 des Bandes 3 geführt, dass die Langseiten des Rechteckprofils in Umfangsrichtung des Bandes 3 weisen und die Traverse 31 somit der in Umfangsrichtung wirkenden Zugkraft des Spannbandes 39 den höheren Biegewiderstand entgegensetzt. Bei der Reihe von über den Bogen des Bandes 3 angeordneten Kabelaufnahmen 11 ersetzen die beiden Endteile 35 der Traverse 31 jeweils den äußeren Positionierbolzen 23 der jeweils letzten Kabelaufnahme 11. Der Rechteckform dieser Endteile 35 angepasst, befindet sich in der jeweiligen Vertiefung 21 der Seitenfläche 19 der Kabelaufnahmen 11 am Grund der Vertiefung 21 eine sich an die Teilzylinderfläche 25 anschließende, weiter vertiefte Nut 41 (Fig. 5), in die das Endteil 35 der Traverse 31 passend eingreift.

Wie Fig. 1, 2 und 3 zeigen, liegt das Spannband 39, das mittels eines dem Stand der Technik entsprechenden Spannschlosses 43 (Fig. 3) spannbar ist, an der Oberseite von Haltekörpern 45 an. Die Kabelaufnahmen 11 weisen jeweils eine muldenartige Kabeldurchführung 47 auf, die sich zum Muldengrund hin verjüngt und am oberen Ende eine Einlegeöffnung zum Einlegen der (nicht gezeigten) Kabel aufweist. Die Haltekörper 45 weisen unterhalb eines oberen Deckteils, das an seiner Oberseite die Anlagefläche für das Spannband 39 bildet, ein unteres Klemmteil 51 auf, das sich bei dem in Fig. 2 und 3 dargestellten Betriebszustand über die Einlegeöffnung der betreffenden Kabeldurchführung 47 erstreckt eine Kraft auf die eingelegten Kabel ausübt.

Die Haltekörper 45 weisen an der einen Seite ihres Deckteils 49 Gelenkwangen 53 auf, mit denen sie scharnierartig an einem Schwenklager 55 angelenkt sind, das sich an den Kabelaufnahmen 11 an deren Einlegeöffnung befindet. Gegenüber der in Fig. 2 und 3 gezeigten Position sind die Haltekörper 45 daher in eine Einlegeposition nach oben wegschwenkbar, um Kabel in die Kabeldurchführungen 47 einzulegen, bevor das Spannband 39 angelegt, geschlossen und gespannt wird. Nach Durchführen des Einlegevorganges an der jeweiligen Kabelaufnahme 11 wird der Haltekörper 45 aus der Einlegeposition in eine Vorfixierposition an die Kabelaufnahme 47 angeschwenkt. In dieser Vorfixierposition sind die Haltekörper 45 jeweils mittels nachgiebiger Rastzungen 57 sicherbar, die am Deckteil 49 an dem den Gelenkwangen 53 entgegengesetzten Ende angeformt sind. Diese Rastzungen 57 kommen mit Rastnasen 59 an den Kabelaufnahmen 11 in Rasteingriff. Nachdem die Haltekörper 45 so vorfixiert sind, wird das Spannband 39 über die Deckteile 49 der Haltekörper 45 geführt und mittels des Spannschlosses 53 gespannt. Sofern die Haltekörper 45 über eine Rast oder sonstige Festlegeverbindung definiert in einer die Kabelaufnahmen 11 verschließenden oder blockierenden Position gehalten werden können, kann bei einem nicht näher dargestellten Ausführungsbeispiel das Spannband gegebenenfalls auch vollständig entfallen.

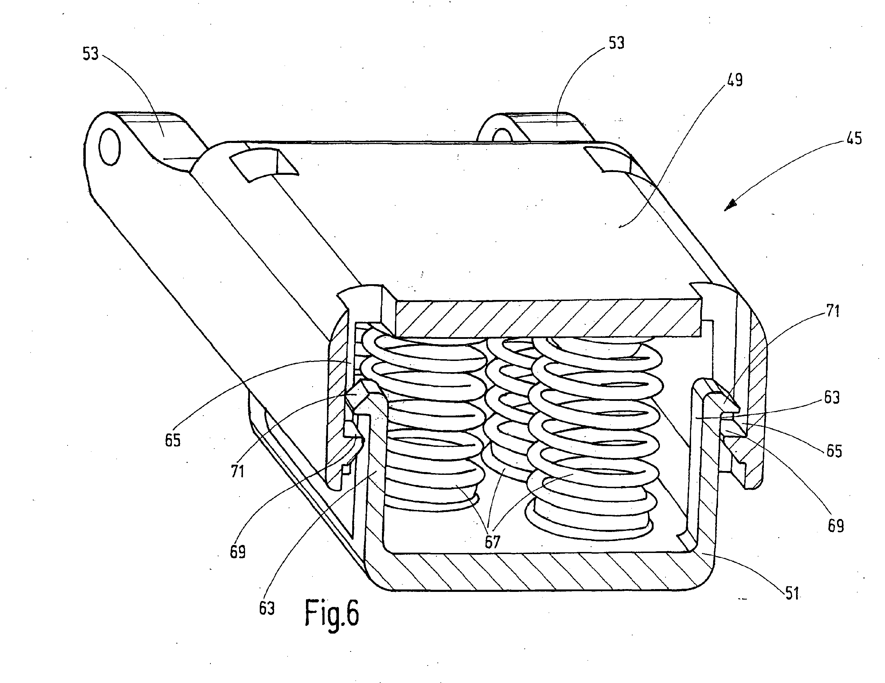

Die Fig. 6 verdeutlicht eine Ausführungsvariante für die Haltekörper 45. Anstatt diese als einteiliges Bauteil, beispielsweise als Pressformteil aus Kunststoff, auszubilden, können die Haltekörper 45, wie in Fig. 6 gezeigt, ein relativ zum Deckteil 49 bewegliches Klemmteil 51 aufweisen. Hierbei hat das Klemmteil 51 die Form einer rechteckförmigen Platte, von deren Eckbereichen sich Führungsleisten 63 in Richtung auf das Deckteil 49 erstrecken und in Führungsbahnen 65 im Deckteil 49 verschiebbar geführt sind. Zwischen Klemmteil 51 und dem Deckteil 49 ist ein Federpaket aus mehreren Druckfedern 67 eingelegt, die das Klemmteil 51 in Richtung auf die Kabel zu deren Positionierung zustellt. Für die Begrenzung des Federweges und um den Austritt des durch das Federpaket belasteten Klemmteiles 51 aus dem gebildeten Federgehäuse zu verhindern, sind an der Führung 65 des Deckteils 49 und an den Führungsleisten 63 des Klemmteils 51 Anschlagnasen 69 bzw. 71 vorgesehen.

Dank der strukturfesten, den Grundkörper 1 bildenden Stahlkonstruktion können die Kabelaufnahmen 11, die Haltekörper 45 sowie die Positionierbolzen 23 aus kostengünstigen, eine rationelle Fertigung ermöglichenden Werkstoffen gefertigt sein, beispielsweise aus Kunststoff pressgeformt sein.

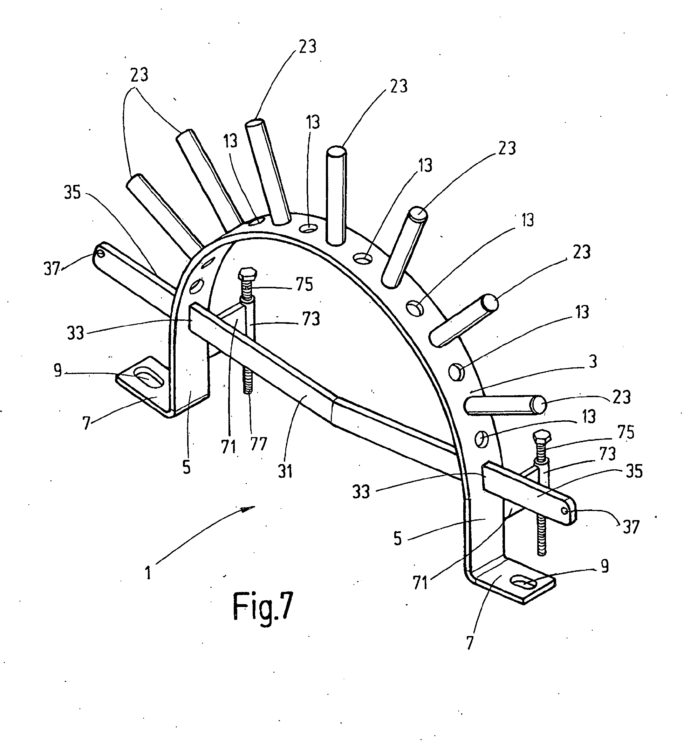

Die Fig. 7 zeigt in gesonderter Darstellung den Grundkörper eines abgewandelten Ausführungsbeispiels. Im Unterschied zum zuvor beschriebenen Beispiel ist am Grundkörper 1 eine Ausrichteinrichtung vorgesehen. Diese ist insbesondere für Einsatzzwecke vorgesehen, bei denen der Grundkörper 1 bei einer Windkraftanlage an der Innenwand eines an sich konisch ausgebildeten Turmsegmentes anzubringen ist, das sich zum Maschinenhaus hin im Durchmesser verringert, so dass die Innenwand einen Schrägverlauf zur Vertikalen besitzt. Mittels der Ausrichteinrichtung ist die Orientierung der Ebene des Bogens 3 mit den Kabelaufnahmen 11 in eine an die jeweilige Wandneigung angepasste Orientierung ausrichtbar.

Die Ausrichteinrichtung weist zu diesem Zweck von den Endabschnitten 5 des Bandes 3 in jeweils gleiche Richtung auskragende Ausleger 71 auf, an deren Ende sich jeweils eine Gewindehülse 73 befindet. Eine Stellschraube 75 in jeder Gewindehülse 73, die sich mit ihrem freien Ende 77 an der Innenwand des betreffenden Turmsegmentes abstützt, ermöglicht die gewünschte Lageeinstellung der Ebene des Bogens 3 relativ zur Turmwand.

## Patentansprüche

1. Befestigungssystem für Kabel, insbesondere bei Windkraftanlagen, mit einem Grundkörper (1), der an einer Tragstruktur festlegbar ist, und mit Kabelaufnahmen (11), die zum Einlegen von Kabeln eine Öffnung aufweisen, die durch eine Abdeckeinrichtung (45) verschließbar sind, wobei Kabelaufnahmen (11) in Form von am Grundkörper (1) anbringbaren Bauteilen vorgesehen und am Grundkörper (1) in einer sich zumindest über einen Teil eines Ringes erstreckenden Anordnung mit außenliegender Öffnung angeordnet sind und wobei die Abdeckeinrichtung Haltekörper (45) aufweist, mittels denen die Öffnung der jeweiligen Kabelaufnahmen (11) zur Fixierung von eingelegten Kabeln blockierbar ist, **dadurch gekennzeichnet, dass** der Grundkörper (1) ein Band (3) aufweist, das sich zwischen Endabschnitten (5) in einem ein Teil eines Kreisringes bildenden Bogen erstreckt, entlang dem eine Reihe von Kabelaufnahmen (11) angebracht ist und dass die Kabelaufnahmen (11) zwischen Positionierkörpern (23) angeordnet sind, die sich in einer in Umfangsrichtung verlaufenden Reihe vom kreisbogenartigen Band (3) radial erstrecken und mit Führungskanälen passend in Eingriff kommen, die durch Vertiefungen (21) in den Seitenwänden (19) der Kabelaufnahmen (11) gebildet sind.

2. Befestigungssystem nach Anspruch 1, **dadurch gekennzeichnet, dass** die Abdeckeinrichtung ein die Anordnung der Kabelaufnahmen (11) am Grundkörper umfassendes und die Haltekörper (45) sicherndes Spannband (39) aufweist.

3. Befestigungssystem nach Anspruch 1 oder 2, **dadurch gekennzeichnet, dass** das Band (3) aus Stahl ist und sich zwischen Endabschnitten (5), die Anbringstellen (7, 9) zur Verankerung an der Tragstruktur bilden, erstreckt.

4. Befestigungssystem nach einem der vorstehenden Ansprüche, **dadurch gekennzeichnet, dass** eine sich in Form einer Sehne durch das Innere des Bogens erstreckende Traverse (31) vorgesehen ist, die das Band (3) des Bogens auf beiden Seiten zwischen den als Verankerungsstelle dienenden Endabschnitten (5) und dem jeweiligen Ende der Reihe der Kabelaufnahmen (11) durchdringt und nach außen vorsteht, und dass die vorstehenden Enden (35) der Traverse (31) jeweils eine Angriffsstelle (37) für das Spannband (39) bilden.

5. Befestigungssystem nach einem der vorstehenden Ansprüche, **dadurch gekennzeichnet, dass** die Traverse durch einen Stahlstab (31) gebildet ist, der einen Querschnitt in Form eines Rechteckes aufweist und mit sich in Umfangsrichtung des Bogens erstreckenden Langseiten einen Schlitz (33) im Band (3) des Bogens durchgreift.

6. Befestigungssystem nach einem der vorstehenden Ansprüche, **dadurch gekennzeichnet, dass** jede Kabelaufnahme (11) einzeln mit dem Band (3) des Grundkörpers (1) verbindbar ist und eine muldenartige Kabeldurchführung (47) aufweist.

7. Befestigungssystem nach einem der vorstehenden Ansprüche, **dadurch gekennzeichnet, dass** die Kabelaufnahmen (11) zur Anlage am Band (3) eine dessen Wölbung entsprechend gewölbte Grundfläche (17) aufweisen, und dass zwischen dieser und dem Band (3) eine die Kabelaufnahmen (11) am Grundkörper (1) sichernde Verrastung (13, 15) gebildet ist.

8. Befestigungssystem nach einem der vorstehenden Ansprüche, **dadurch gekennzeichnet, dass** die Haltekörper (45) am Rand der Öffnung der muldenartigen Kabeldurchführungen (47) der Kabelaufnahmen (11) derart schwenkbar gelagert sind, dass die Haltekörper (45) zwischen einer von der Öffnung abgeschwenkten Einlegeposition und einer die eingelegten Kabel sichernden Vorfixierposition bewegbar sind, und dass zwischen Kabelaufnahmen (11) und Haltekörpern (45) eine diese in der Vorfixierposition sichernde Rasteinrichtung (57, 59) vorgesichert ist.

9. Befestigungssystem nach einem der vorstehenden Ansprüche, **dadurch gekennzeichnet, dass** die Haltekörper (45) ein Deckteil (49), das an der Kabelaufnahme (11) angelenkt ist und an seiner Oberseite eine Auflagefläche für das Spannband (39) bildet, sowie ein am Deckteil (49) verschiebbar geführtes Klemmteil (51) aufweist, das durch eine Federanordnung (67) in Richtung auf die aufzunehmenden Kabel vorzugsweise eine Haltekraft ausübt.

## Claims

1. A fixing system for cables, in particular in wind turbines, having a main body (1) which can be fixed to a supporting structure, and having cable holders (11) which have an opening for the insertion of cables, which openings can be closed by a covering device (45), cable holders (11) being provided in the form of components that can be mounted on the main body (1) and being disposed on the main body (1) in an arrangement extending over at least part of a ring with the openings on the outside, and the covering device having retaining elements (45) by means of which the opening of the respective cable holders (11) can be blocked (11) in order to secure the inserted cables, **characterised in that** the main body (1) has a band (3) that extends between end sections (5) in an arc forming part of a circular ring, along which a series of cables holders (11) is mounted, and that the cable holders (11) are arranged between positioning elements (23) which extend radially in a row running in the circumferential direction from the circular arc-like band (3) and engage appropriately with guide channels which are formed by indentations (21) in the side walls (19) of the cable holders (11).

2. The fixing system according to Claim 1, **characterised in that** the covering device comprises a band clamp (39) which encircles the arrangement of cable holders (11) on the main body and secures the retaining elements (45).

3. The fixing system according to Claim 1 or 2, **characterised in that** the band (3) is made of steel and extends between end sections (5) that form attachment points (7, 9) for anchoring on the supporting structure.

4. The fixing system according to any of the preceding claims, **characterised in that** a cross-member (31) in the form of an axis extending through the inside of the arc is provided which penetrates the band (3) of the arc on both sides between the end sections (5) that serve as anchoring sites and the respective end of the row of cable holders (11) and projects outward, and that the projecting ends (35) of the cross-member (31) each form a point of application (37) for the band clamp (39).

5. The fixing system according to any of the preceding claims, **characterised in that** the cross-member is formed by a steel rod (31) which has a cross section in the form of a rectangle and, with long sides extending in the circumferential direction of the arc, passes through a slot (33) in the band (3) of the arc.

6. The fixing system according to any of the preceding claims, **characterised in that** each cable holder (11) can be connected individually to the band (3) of the main body (1) and has a trough-shaped cable guide (47).

7. The fixing system according to any of the preceding claims, **characterised in that** the cable holders (11) have a curved base (17) corresponding to the curvature of the band (3) for installation on the latter, and that a catch mechanism (13, 15) is formed between this curved base and the band (3) which secures the cable holders (11) on the main body (1).

8. The fixing system according to any of the preceding claims, **characterised in that** the retaining elements (45) are pivotably mounted on the edge of the opening of the trough-shaped cable guides (47) of the cable holders (11) in such a way that the retaining elements (45) can be moved between an insertion position that can be turned away from the opening and a pre-fastening position securing the inserted cables, and that there is provided between the cable holders (11) and the retaining elements (45) a locking device (57, 59) which secures the retaining elements in the pre-fastening position.

9. The fixing system according to any of the preceding claims, **characterised in that** the retaining elements (45) have a covering part (49) which is hinged on the cable holder (11) and forms a support surface on its upper side for the band clamp (39), and a displaceable clamping part (51) on the covering part (49) which preferably exerts a retaining force by means of a spring arrangement (67) in the direction of the cables to be received.

## Revendications

1. Système de fixation de câbles, notamment dans des éoliennes, comprenant un corps (1) de base, qui peut être fixé sur une structure porteuse, et des logements (11) de câbles, qui ont une ouverture pour l'insertion de câbles, qui peuvent être fermés par un dispositif (45) de recouvrement, des logements (11) de câbles étant prévus sur des pièces pouvant être mises sur le corps (1) de base et étant disposés sur le corps (1) de base suivant un agencement s'étendant au moins sur une partie d'un anneau, en ayant une ouverture tournée vers l'extérieure, et le dispositif de recouvrement ayant des corps (45) de maintien, au moyen desquels l'ouverture du logement (11) de câbles respectif peut être bloquée pour l'immobilisation de câbles insérés, **caractérisé en ce que** le corps (1) de base a un bandeau (3), qui s'étend entre des tronçons (5) d'extrémité suivant un arceau, qui forme une partie d'un anneau de cercle et le long duquel est disposée une série de logements (11) de câbles, et **en ce que** les logements (11) de câbles sont disposés entre des corps (23) de mise en position, qui s'étendent radialement du bandeau (3) de type en arc de cercle suivant une rangée s'étendant dans la direction périphérique et qui viennent en prise, de manière adaptée, avec des canaux de guidage, qui sont formés par des cavités (21) dans les parois (19) latérales des logements (11) de câbles.

2. Système de fixation suivant la revendication 1, **caractérisé en ce que** le dispositif de recouvrement a un collier (39) de fixation, comprenant l'agencement des logements (11) de câbles sur le corps de base et assujettissant les corps (45) de maintien.

3. Système de fixation suivant la revendication 1 ou 2, **caractérisé en ce que** le bandeau (3) est en acier et s'étend entre des tronçons (5) d'extrémité, qui forment des points (7, 9) d'ancrage à la structure porteuse.

4. Système de fixation suivant l'une des revendications précédentes, **caractérisé en ce qu'**il est prévu une traverse (31), qui s'étend sous la forme d'une corde à l'intérieur de l'arceau, qui traverse le bandeau (3) de l'arceau des deux côtés entre les tronçons (5) d'extrémité servant de points d'ancrage et l'extrémité respective de la série des logements (11) de câbles et est en saillie vers l'extérieur et **en ce que** les extrémités (35) en saillie de la traverse (31) forment respectivement un point (31) d'attaque du collier (39) de fixation.

5. Système de fixation suivant l'une des revendications précédentes, **caractérisé en ce que** la traverse est formée par une barre (31) d'acier, qui a, en section transversale, la forme d'un rectangle et passe par des grands côtés s'étendant dans la direction périphérique de l'arceau dans une fente (33) du bandeau (3) de l'arceau.

6. Système de fixation suivant l'une des revendications précédentes, **caractérisé en ce que** chaque logement (11) de câbles peut être relié individuellement au bandeau (3) du corps (1) de base et a une traversée (47) de câbles en forme d'auge.

7. Système de fixation suivant l'une des revendications précédentes, **caractérisé en ce que** les logements (11) de câbles ont, pour l'application au bandeau (3), une surface (17) de base courbée d'une manière correspondante à sa courbure et **en ce que**, entre celle-ci et le bandeau (3), est formé un encliquetage (13, 15) fixant les logements (11) de câbles au corps (1) de base.

8. Système de fixation suivant l'une des revendications précédentes, **caractérisé en ce que** les corps (45) de maintien sont montés pivotants au bord de l'ouverture des traversées (47) de câbles en forme d'auge des logements (11) de câbles, de manière à ce que les corps (45) de maintien puissent être déplacés entre une position d'insertion éloignée de l'ouverture et une position de préimmobilisation assujettissant un câble inséré et **en ce que**, entre des logements (11) de câbles et des corps (45) de maintien, est préassujetti un dispositif (57, 59) d'encliquetage assujettissant dans la position de préimmobilisation.

9. Système de fixation suivant l'une des revendications précédentes, **caractérisé en ce que** les corps (45) de maintien ont une partie (49) de couverture, qui est articulée aux logements (11) de câbles et qui forme sur son côté supérieur une surface d'appui pour le collier (49) de fixation, ainsi qu'une partie (51) de serrage, qui est guidée à coulissement sur la partie (49) de recouvrement et qui applique, par un agencement (67) de ressort, de préférence une force de maintien dans la direction du câble à recevoir.
